# EUROPEAN PATENT SPECIFICATION

(11) **EP 1 408 730 B1**
(45) Date of publication and mention of the grant of the patent: **17.10.2007**
(21) Application number: 02749431.9
(22) Date of filing: 16.07.2002
(51) Int. Cl.: A01D 45/00, A01B 77/00

(54) **METHOD AND DEVICE FOR HARVESTING GRASSES, SUCH AS IN THE FORM OF "SPRIGS" AND "PLUGS" FOR EXAMPLE**
VERFAHREN UND VORRICHTUNG ZUM ERNTEN VON GRAS BEISPIELSWEISE IN FORM VON GRASSCHÖSSLINGEN ODER GRASFLECKEN
PROCEDE ET DISPOSITIF DE RECOLTE DE GRAMINEES, DE TYPE ALLONGEES ET PLATES

(30) Priority: 17.07.2001 NL 1018565
(43) Date of publication of application: 21.04.2004
(73) Proprietor: Rodenburg, Jacob Jacobus, 3211 BM Geervliet (NL)
(72) Inventor: Rodenburg, Jacob Jacobus, 3211 BM Geervliet (NL)
(74) Representative: Lips, Hendrik Jan George
(86) International application number: PCT/NL2002/000477
(87) International publication number: WO 2003/007692

(56) References cited:
- DE-A- 1 482 214
- US-A- 3 116 795
- US-A- 3 410 350
- US-A- 3 739 857
- US-A- 5 673 756
- US-A- 5 816 336

## Description

The invention relates to a method and device for harvesting grasses, such as e.g. in the form of "sprigs" and "plugs", according to the preamble of claims 1 and 2.

In particular in regions with a relatively hot climate, grass varieties having very different properties occur, especially with regard to the structure of the roots. Examples of such regions are the southern part of the USA, Australia and like regions.

There are certain varieties, e.g. "Bermudas" and "Centipede", so-called "hot season grasses", which, in the cold winter season, i.e. at a temperature below approx. 13°C, hardly grow or don't grow at all and turn brown. These can be removed as turfs in order to be used on other locations. It also happens that only the "roots" are collected in the form of so-called "sprigs" and are then used elsewhere.

Certain varieties of likewise hot season grasses, such as e.g. "St. Augustines" and "Zoysias" are particularly more or less removed as turfs and then chopped. This chopped material is indicated by the term "plugs" and can be scattered or planted on a desired location for taking root and for multiplying.

Various methods and devices are applied for said purposes. For example in US3116795A, a device looking somewhat like a potato lifting machine is used for obtaining said "sprigs". Then, the complete ground is turned up, which requires much energy and causes drying-up of the ground. Further, the ground will become very uneven, so that in most cases it will be necessary to level the ground again after harvesting of the "sprigs". For obtaining said "plugs", first, pieces of grass turfs are picked up and subsequently the pieces are chopped in another machine. Thus, various successive actions are required.

The object of the invention is to provide for a method and a device which is universally applicable and therefore requires less separate steps for achieving the object set, the method requiring less energy.

The method according to the invention is characterized in that use is made of a device which can be coupled to a tractor and comprises a shaft which can be moved, transverse to its longitudinal axis, in a given direction across the ground and at some distance over it, said shaft carrying mutually spaced milling cutters across its length, and being rotated in such a direction that the lowest portion of said milling cutters is moving in the same direction as the shaft itself, the material loosened by said milling cutters being guided by a bent hood and then being received by a conveyor for bringing the harvested material to a vehicle.

It has turned out, that in this way, one single operation is sufficient for obtaining "sprigs" or "plugs". Since little or no ground is moved, the operation requires only a relatively small amount of energy. Further, the yield has proven to be much higher than with the known methods, in that much less material remains behind on or in the ground. Further, the ground will be more even, so that it is not necessary to even the ground after harvesting when it is needed for a subsequent use, such as e.g. for cutting turfs.

The method can also be used with golf courses and possibly other sports fields where the difficulties described above occur. As stated earlier, when the temperature drops to below approx. 13°C, the grass will start to turn brown and will start its "hibernation", as it were. Now, with the help of the method, this grass can be removed more or less at the surface, as a result of which the "cold season grass", possibly sowed-in simultaneously, will get the chance to grow. In this way, one always gets a green field. When the cold season is over, the cold season grass can be removed correspondingly.

From DE-A-1 153 563 a device is known comprising a frame which can be coupled to a tractor and is provided with means for rotatably and drivably supporting a shaft and with means for adjusting the shaft at a desired height above the ground, in which said shaft is provided with supporting plates being mutually spaced-apart and extending square to it, at least a number of which carrying cutters, distributed across the circumference and extending almost parallel to said shaft.

This known device is ment for loosening a layer of the ground over which it is moved. So the cutters are brought into the ground over a given distance and are very special shaped, such that the loosened ground will not shift along said cutters. Further the front side of the cutters is moving downwardly.

For applying the method as described before said device is characterized in that it is executed such that when said shaft is driven in a given direction said shaft is rotated in such a direction that said cutters at their lowest point are moving in the same direction as said shaft, a bent hood and a conveyor being provided for bringing the harvested material to a vehicle.

It can be provided for, that the milling cutters of successive supporting plates overlap at least partially.

NL-A-1006228 can be pointed to, which shows a device which is particularly intended for treating the grass of a sports field. There, a rotatably supported shaft is provided with operating members square to said shaft and being intended for pushing up the ground to beyond the grass, and is provided with arms having plate-shaped knives at their ends for distributing the pushed-up ground and evening the ground.

Thus, this device has an object different from the device according to the present invention, in which only milling cutters are used for harvesting certain materials.

According to the invention, it is possible that a number of supporting plates are free from milling cutters. In this way, unprocessed grass back can remain behind between strips where grass is harvested. From these backs, the grass can grow out over the places where grass was removed. It is also possible to arrange grass turfs on locations where grass was removed. Since the ground remains largely plane, the arrangement of grass turfs will not cause any problems.

According to a further development of the invention, the supporting plates can also be provided with aerating knives being square to said shaft, apart from said milling cutters, in which said aerating knives can extend across a larger distance outwards than said milling cutters, in relation to the axis of the shaft.

Said aerating knives then serve for making grooves in the grass, for as far it has remained after operation with said milling cutters, or in the top layer of the ground for venting, cleaning, decreasing, water discharge, root activation and regeneration thereof and further for preparation of the seedbed.

Thus, these operations can take place simultaneously, so that separate operations are not necessary.

In particular, one or more aerating knives can be mounted on a supporting shaft, extending between two supporting plates, in which bushes have been mounted on the supporting shaft, at both sides of the aerating knive or aerating knives, for arranging the aerating knive or aerating knives at the desired distance between said supporting plates.

Then, the supporting plates can be provided with holes distributed across the circumference in which supporting shafts can be mounted, in which an aerating knive can pivot on a supporting shaft and can be fixed in a certain position or be limited in its movement by means of at least one secondary supporting shaft which is received in holes in said supporting plates.

Due to this, simultaneous processing of the ground with the milling cutters and with the aerating knives can take place, in which the operating depth of the aerating knives can be adjusted independently from the milling cutters. It is also possible that the aerating knives are put out of operation completely.

In order to make easy discharge of the loosened material to be removed, it can be provided for, that, seen in the direction of movement of the frame, after the shaft supported by it, there is a conveyor such as a conveyor belt for receiving the material loosened by the knives and its discharge.

The conveyor can also comprise a part for sieving the material, which part can be formed by a sieve belt, a sieve drum, or the like.

In order to prevent loosened ground, such as sand, for example, from ending up directly on the conveyor together with the harvested material and from only being separated after it, a hood extending parallel to the shaft can be mounted, which is executed in such a way, that in particular the loosened ground is let through and can fall down, whereas the harvested material can be discharged by means of the conveyor.

Through this, it is achieved that a part of the loosened material, such as sand, for example, immediately falls back on the ground and that only the other, larger components are discharged.

Further it is possible to mount a sowing container immediately after the milling cutters or the aerating knives so that the loosened ground can be sowed-in immediately.

The invention is further explained by way of examples, illustrated in the drawing, in which:
Fig. 1 shows schematically a side view of a device according to the invention in which certain parts have been omitted for the sake of clarity;
Fig. 2 shows a view of the driven shaft and the milling cutters connected to it;
Fig. 3 shows an end view of the shaft and of a supporting plate with milling cutters and aerating knives mounted on it; and
Fig. 4 shows a side view of two supporting plates having two aerating knives mounted between them.

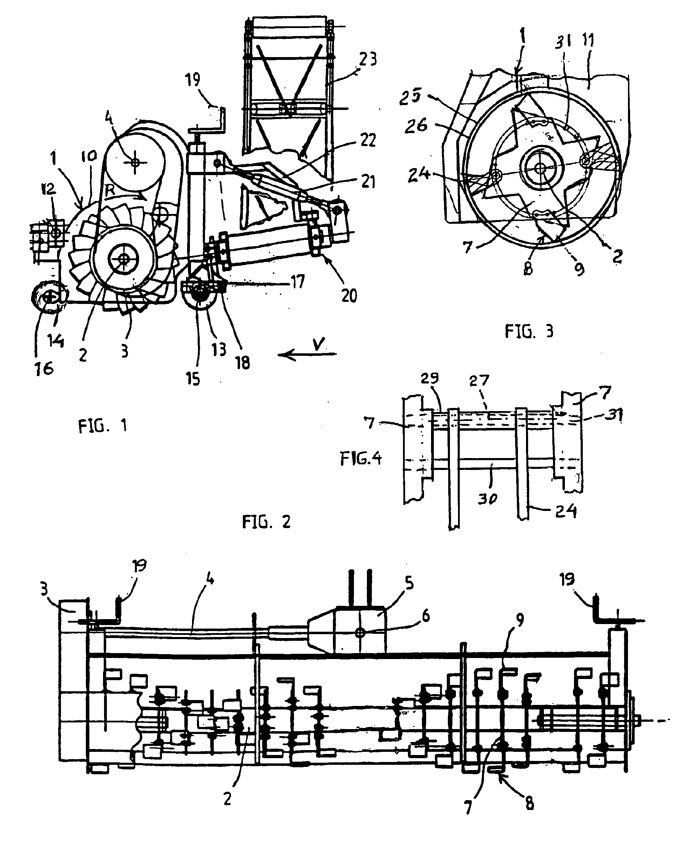

Figure 1 illustrates a device comprising a frame 1 for supporting a shaft 2, which can be driven by a belt- or chain transmission 3 and a shaft 4, as illustrated in Figure 2. Driving the shaft 4 takes place from a gear box 5, its input shaft 6 being driven from the tractor not illustrated.

Supporting plates 7 are connected to the shaft 2, said supporting plates being provided with milling cutters 8, their operational part 9 being almost parallel to the axis of shaft 2. As illstrated in Figure 2, not all supporting plates need to be provided with milling cutters 8. As described above, unprocessed grass backs can remain behind.

Across at least a part of the path described by the milling cutters 8, a bent hood 10 is connected to the frame 1 for guiding the loosened material. The ends of the hood 10 are, for the sake of safety, closed off by end plates 11 having their lower edge extending to near the lower edge of the path described by the milling cutters 8.

At one side, frame 1 is coupled to a tractor, not illustrated, in the points 12. At the other side, frame 1 is supported by a pair of rollers 13, 14, its rotating shafts 15, 16 being rotatably received in a yoke 17, which is rotatable around the shaft 18, which is adjustable in height by means of the grips 19. The grips can be used for actuating e.g. screwed rods in a known way, by which telescopic ally slidably cylinders can be displaced in relation to one another.

The chassis of a conveyor 20 is connected to said frame 1, said chassis extending in parallel to the shaft 2 and serving for receiving the materiaal loosened and thrown off by the milling cutters 8. Conveyor 20 can be releasably connected to the frame 1 to which end quick couplings 21 can be used. A hood 22 connected to the hood 10 can be mounted above the conveyor. The end of conveyor 20 can be connected to a conveyor 23 extending obliquely upward, only some parts thereof being illustrated in Figure 1. With the help of said conveyor 23, material from conveyor 20 can be brought onto a vehicle driving along with the device. Parts of said conveyor 20 can be executed in the shape of a sieve belt, a sieve drum, or the like.

It is also possible to bring the harvested material onto a conveyor arranged directly behind the device, which brings the material in driving direction onto a vehicle present behind the device. Then, no car driving beside the device need be employed.

Figure 3 illustrates the possibility to provide the supporting plates 7 mounted on shaft 4 both with milling cutters 8 and with aerating knives 24. The path 25 described by the aerating knives 24 can then be outside of the path 26 described by the milling cutters 8.

Figure 4 illustrates the possibility of e.g. mounting two aerating knives 24 on a supporting shaft 27, located between two supporting plates 7. In order to mount the aerating knives 24 at the desired position on the supporting shaft 27, bushes 29 can be situated on the supporting shaft 27.

The aerating knives 24 can be pivotable on the supporting shaft 27 and are fixed by means of on or two secondary supporting shafts 30 which will be blocked in one direction by a secondary supporting shaft.

The supporting plates 7 can have an anullar shape and can be provided with circumferentially spaced holes 31 in which the supporting shafts 27 and the secondary supporting shafts 30 can be received. Therefore, it is possible to put the aerating knives out of operation by mounting the secondary supporting shafts 30 in the appropriate position.

As indicated in Figure 1, in operation, the device will be moved in the direction of the arrow V with the help of a tractor, whereas the shaft 2 will then be rotated in the direction as indicated by the arrow R.

With the help of the grips 19, the shaft 18 and with it, through the shaft 2, the milling cutters 8 can be displaced in vertical direction, so that they can take up the desired position in relation to the material to be processed for achieving the desired effect.

Obviously, the speed of the shaft 2, so the circumferential speed of the cutting knives 8, will be adapted to the velocity at which the device is moved in the direction of the arrow V, by means of the tractor, for achieving the desired result.

It will be obvious, that only some possible embodiments of a device according to the invention have been illustrated in the drawing and described above and that many modifications can be made without departing from the inventive idea, as it has been indicated in the accompanying claims.

## Claims

1. Method for harvesting grasses, such as e.g. in the form of "sprigs" and "plugs", **characterized in that** use is made of a device which can be coupled to a tractor and comprises a shaft (2) which can be moved, transverse to its longitudinal axis, in a given direction (V) across the ground and at some distance over it, said shaft (2) carrying mutually spaced milling cutters (8) across its length, and being rotated in such a direction (R) that the lowest portion of said milling cutters (8) is moving in the same direction as the shaft (2) itself, the material loosened by said milling cutters being guided by a bent hood (10) and then being received by a conveyor (20) for bringing the harvested material to a vehicle.

2. Device for applying the method according to claim 1, comprising a frame (1) which can be coupled to a tractor and is provided with means for rotatably and drivably supporting a shaft (2) and with means (13-19) for adjusting said shaft (2) at a desired height above the ground, said shaft being provided with supporting plates (7) being mutually spaced-apart and extending square to it, at least a number of said supporting plates (7) carrying cutters (8), distributed across the circumference and extending almost parallel to said shaft (2), **characterized in that** said device is executed such that when said shaft (2) is driven in a given direction (V) said shaft (2) is rotated in such a direction (R) that said cutters (8) at their lowest point are moving in the same direction as said shaft (2), a bent hood (10) and a conveyor (20) being provided for bringing the harvested material to a vehicle.

3. Device according to claim 2, **characterized in that** the milling cutters (8) of successive supporting plates (7) overlap at least partially.

4. Device according to claim 2 or 3, **characterized in that** a number of supporting plates (7) are free from milling cutters (8).

5. Device according to one of the claims 2 - 4, **characterized in that** the supporting plates (7) can also be provided with aerating knives (24) being square to said shaft (2), apart from said milling cutters (8), in which said aerating knives can extend across a larger distance (25) outwards than said milling cutters (8), in relation to the axis of the shaft.

6. Device according to claim 5, **characterized in that** one or more aerating knives (24) are mounted on a supporting shaft (27), extending between two supporting plates (7), in which bushes (29) have been mounted on the supporting shaft, at both sides of the aerating knive (24) or aerating knives, for arranging the aerating knive (24) or aerating knives at the desired distance between said supporting plates (7).

7. Device according to claim 5 or 6, **characterized in that** the supporting plates (7) are provided with holes (31) distributed across the circumference in which supporting shafts (27) can be mounted, in which an aerating knive (24) can pivot on a supporting shaft (27) and can be fixed in a certain position or be limited in its movement by means of at least one secondary supporting shaft (30) which is received in holes (31) in said supporting plates (7).

8. Device according to one of the claims 2 - 7, **characterized in that**, seen in the direction of movement (V) of the frame (1), after the shaft (2) supported by it, there is a conveyor (20) such as a conveyor belt for receiving the material loosened by the milling cutters (8) and its discharge.

9. Device according to claim 8, **characterized in that** the conveyor (20) comprises a part for sieving the material, which part can be formed by a sieve belt, a sieve drum, or the like.

10. Device according to claim 8 or 9, **characterized in that** a hood extending parallel to the shaft is mounted, which is executed in such a way, that in particular the loosened ground is let through and will fall down, whereas the harvested material is discharged by means of the conveyor.

11. Device according to one of the claims 6 - 10, **characterized in that** a sowing container is mounted immediately after the milling cutters (8) or the aerating knives (24) so that the loosened ground can be sowed-in immediately.

## Patentansprüche

1. Verfahren zum Ernten von Gras, beispielsweise in Form von Grasschösslingen und/oder Grasflecken, **dadurch gekennzeichnet, dass** eine Vorrichtung verwendet wird, welche mit einem Traktor gekoppelt werden kann und einen Schaft (2) umfasst, welcher quer zu seiner Längsachse in einer vorgegebenen Richtung (V) über den Boden und in einigem Abstand über ihn bewegt werden kann, wobei der Schaft (2) gegenseitig beabstandete Zerkleinerungsschneideinrichtungen (8) quer über seine Länge trägt, und welcher in einer solchen Richtung (R) rotiert wird, dass der tiefste Bereich der Zerkleinerungsschneideinrichtungen (8) sich in derselben Richtung wie der Schaft (2) selbst bewegt, wobei das durch die Zerkleinerungsschneideinrichtungen gelöste Material durch eine gekrümmte Haube (10) geführt wird und dann durch eine Fördereinrichtung (20) zum Bringen des geernteten Materials zu einem Fahrzeug aufgenommen wird.

2. Vorrichtung zum Anwenden des Verfahrens gemäß Anspruch 1, umfassend einen Rahmen (1), welcher an einen Traktor gekoppelt werden kann und mit Mitteln zum rotierbaren und antreibbaren Halten eines Schafts (2) und mit Mitteln (13 bis 19) zum Einstellen des Schafts (2) in einer gewünschten Höhe über dem Boden ausgestattet ist, wobei der Schaft mit Halteplatten (7) ausgestattet ist, welche gegenseitig voneinander beabstandet sind und sich rechtswinklig zu ihm erstrecken, wobei mindestens eine Anzahl der Halteplatten (7) Schneideinrichtungen (8) trägt, welche über den Umfang des Schafts (2) verteilt und sich nahezu parallel zu dem Schaft (2) erstrecken, **dadurch gekennzeichnet, dass** die Vorrichtung derart betrieben wird, dass dann, wenn der Schaft (2) in einer vorgegebenen Richtung (V) angetrieben wird, der Schaft (2) in einer solchen Richtung (R) rotiert wird, dass die Schneideinrichtungen (8) an ihrem tiefsten Punkt in derselben Richtung bewegt werden wie der Schaft (2), wobei eine gekrümmte Haube (10) und eine Fördereinrichtung (20) vorgesehen sind zum Bringen des geernteten Materials zu einem Fahrzeug.

3. Vorrichtung nach Anspruch 2, **dadurch gekennzeichnet, dass** die Zerkleinerungsschneideinrichtungen (8) aufeinander folgender Halteplatten (7) mindestens teilweise überlappen.

4. Vorrichtung nach Anspruch 2 oder 3, **dadurch gekennzeichnet, dass** eine Anzahl von Halteplatten (7) frei von Zerkleinerungsschneideinrichtungen (8) ist.

5. Vorrichtung nach einem der Ansprüche 2 bis 4, **dadurch gekennzeichnet, dass** die Halteplatten (7), abgesehen von den Zerkleinerungsschneideinrichten (8), auch mit Auflockerungsmessern (24) ausgestattet sein können, welche den Schaft (2) rechtwinklig schneiden, wobei sich die Auflockerungsmesser bezogen auf die Achse des Schafts über ein größere Strecke (25) quer nach außen erstrecken können als die Zerkleinerungsschneideinrichtungen (8).

6. Vorrichtungen nach Anspruch 5, **dadurch gekennzeichnet, dass** ein oder mehrere Auflockerungsmesser (24) an einen Halteschaft (27), welcher sich zwischen zwei Halteplatten (7) erstreckt, montiert sind, wobei Hülsen (29) auf den Halteschaft auf beiden Seiten des Auflockerungsmessers (24) oder der Auflockerungsmesser montiert sind, um das Auflockerungsmesser (24) oder die Auflockerungsmesser in einem gewünschten Abstand zwischen den Halteplatten (7) anzuordnen.

7. Vorrichtung nach Anspruch 5 oder 6, **dadurch gekennzeichnet, dass** die Halteplatten (7) mit über den Umfang verteilten Löchern (31) versehen sind, in welchen Halteschäfte (27) montiert werden können, wobei ein Auflockerungsmesser (24) sich auf einem Halteschaft (27) drehen kann und in einer bestimmten Position fixiert werden kann oder in seiner Bewegung mittels mindestens eines sekundären Halteschafts (30), welcher in Löchern (31) in den Halteplatten (7) aufgenommen ist, beschränkt werden kann.

8. Vorrichtung nach einem der Ansprüche 2 bis 7, **dadurch gekennzeichnet, dass**, in Bewegungsrichtung (V) des Rahmens (1) gesehen, nach dem an ihm gehaltenen Schaft (2) eine Fördereinrichtung (20), wie beispielsweise ein Förderband, zum Aufnehmen des durch die Zerkleinerungsschneideinrichtungen (8) aufgelösten Materials und dessen Austrag vorgesehen ist.

9. Vorrichtung nach Anspruch 8, **dadurch gekennzeichnet, dass** die Fördereinrichtung (20) einen Teil zum Sieben des Materials umfasst, welcher Teil durch ein Siebband, eine Siebtrommel oder dergleichen gebildet sein kann.

10. Vorrichtung nach Anspruch 8 oder 9, **dadurch gekennzeichnet, dass** eine sich parallel zum Schaft erstreckende Haube montiert ist, welche in einer solchen Weise betrieben wird, dass insbesondere der aufgelöste Boden durchgelassen wird und durchfällt, wohingegen das geerntete Material mittels der Fördereinrichtung ausgestoßen wird.

11. Vorrichtung nach einem der Ansprüche 6 bis 10, **dadurch gekennzeichnet, dass** ein Saatbehälter direkt nach den Zerkleinerungsschneideinrichtungen (8) oder den Auflockerungsmessern (24) montiert ist, so dass der gelöste Boden sofort eingesät werden kann.

## Revendications

1. Procédé de récolte de graminées, de type allongées et plates,
**caractérisé en ce qu'**une utilisation est faite d'un dispositif qui peut être couplé à un tracteur et comprend un arbre (2) qui peut être déplacé, transversale à son axe longitudinal, dans une direction donnée (V) à travers le sol et à une certaine distance au-dessus de lui, ledit arbre (2) portant mutuellement espacées des fraises (8) en travers de sa longueur, et étant entraîné en rotation dans une direction (R) telle que la portion la plus basse desdites fraises (8) se déplace dans la même direction que l'arbre (2) lui-même, la matière relâchée par lesdites fraises étant guidée par un capot protecteur courbé (10) et ensuite étant reçue par un convoyeur (20) pour apporter la matière récoltée à un véhicule.

2. Dispositif pour appliquer le procédé selon la revendication 1, comprenant un cadre (1) qui peut être couplé à un tracteur et est pourvu de moyens pour soutenir de façon rotative et manoeuvrable un arbre (2) et des moyens (13-19) pour ajuster ledit arbre (2) à une hauteur désirée au-dessus du sol, ledit arbre étant pourvu de plaques de soutien (7) mutuellement espacées et s'étendant perpendiculairement à lui, au moins un nombre desdites plaques de soutien (7) portant des fraises (8), distribuées à travers la circonférence et s'étendant quasiment parallèle audit arbre (2),
**caractérisé en ce que** ledit dispositif est réalisé de sorte que lorsque ledit arbre (2) est conduit dans une direction donnée (V), ledit arbre (2) est entraîné en rotation dans une direction (R) telle que lesdites fraises (8) à leur plus bas point se déplacent dans la même direction que ledit arbre (2), un capot protecteur courbé (10) et un convoyeur (20) étant prévus pour amener la matière récoltée au véhicule.

3. Dispositif selon la revendication 2,
**caractérisé en ce que** les fraises (8) des plaques de soutien successives (7) se recouvrent au moins partiellement.

4. Dispositif selon la revendication 2 ou 3,
**caractérisé en ce qu'**un nombre de plaques de soutien (7) sont dégagées des fraises (8).

5. Dispositif selon l'une des revendications 2 à 4,
**caractérisé en ce que** les plaques de soutien (7) peuvent également être prévues avec des couteaux d'aération (24) étant perpendiculaires audit arbre (2), séparément desdites fraises (8), dans lequel lesdits couteaux d'aération peuvent s'étendre au travers d'une distance plus large (25) vers l'extérieur que lesdites fraises (8), par rapport à l'axe de l'arbre.

6. Dispositif selon la revendication 5,
**caractérisé en ce qu'**un ou plusieurs couteaux d'aération (24) sont montés sur un arbre de soutien (27), s'étendant entre deux plaques de soutien (7), dans lesquelles des douilles (29) ont été montées sur l'arbre de soutien, des deux côtés du couteau d'aération (24) ou des couteaux d'aération, pour mettre en place le couteau d'aération (24) ou les couteaux d'aération à la distance désirée entre lesdites plaques de soutien (7).

7. Dispositif selon la revendication 5 ou 6,
**caractérisé en ce que** les plaques de soutien (7) sont prévues avec des orifices (31) distribués à travers la circonférence dans lesquels les arbres de soutien (27) peuvent être montés, dans lesquels un couteau d'aération (24) peut pivoter sur un arbre de soutien (27) et peut être fixé dans une certaine position ou être limitée dans ses mouvements par des moyens d'au moins un arbre de soutien secondaire (30) qui est accueilli dans des orifices (31) dans lesdites plaques de soutien (7).

8. Dispositif selon l'une des revendications 2 à 7,
**caractérisé en ce que**, vu dans la direction de mouvement (V) du cadre (1), après l'arbre (2) soutenu par lui, est présent un convoyeur (20) tel qu'une courroie transporteuse pour recevoir la matière récoltée par les fraises (8) et son déchargement.

9. Dispositif selon la revendication 8,
**caractérisé en ce que** le convoyeur (20) comprend une partie pour tamiser la matière, laquelle partie peut être formée par une courroie de tamisage, un crible à tambour, ou similaire.

10. Dispositif selon la revendication 8 ou 9,
**caractérisé en ce qu'**un capot protecteur s'étendant parallèlement à l'arbre est monté, lequel est réalisé de telle façon que, en particulier la terre relâchée est laissée au travers et retombera, tandis que la matière récoltée est déchargée par des moyens du convoyeur.

11. Dispositif selon l'une des revendications 6 à 10,
**caractérisé en ce que** un conteneur de semis est monté immédiatement après les fraises (8) ou les couteaux d'aération (24) de sorte que la terre relâchée peut être ensemencée immédiatement.
